# EUROPÄISCHE PATENTSCHRIFT

(11) **EP 3 583 593 B1**
(45) Veröffentlichungstag und Bekanntmachung des Hinweises auf die Patenterteilung: **01.06.2022**
(21) Anmeldenummer: 18705581.9
(22) Anmeldetag: 08.02.2018
(51) Int. Cl.: G10K 9/122, G01S 7/521

(54) **MEMBRANTOPF FÜR EINEN ULTRASCHALLWANDLER, VERFAHREN ZUM HERSTELLEN EINES MEMBRANTOPFS UND ULTRASCHALLWANDLER**
DIAPHRAGM CUP FOR AN ULTRASONIC TRANSDUCER, METHOD FOR PRODUCING A DIAPHRAGM CUP, AND UTRASONIC TRANSDUCER
COUPELLE À DIAPHRAGME POUR UN CONVERTISSEUR À ULTRASONS, PROCÉDÉ DE PRODUCTION D'UNE COUPELLE À DIAPHRAGME ET TRANSDUCTEUR À ULTRASONS

(30) Priorität: 15.02.2017 DE 102017202425
(43) Veröffentlichungstag der Anmeldung: 25.12.2019
(73) Patentinhaber: Robert Bosch GmbH, 70442 Stuttgart (DE)
(72) Erfinder: LUDWIG, Ronny, 72770 Reutlingen (DE); DOOTZ, Rolf, 28080 Madrid (ES)
(86) Internationale Anmeldenummer: PCT/EP2018/053185
(87) Internationale Veröffentlichungsnummer: WO 2018/149730

(56) Entgegenhaltungen:
- WO-A1-03/045586
- WO-A1-2015/028180
- DE-A1-102013 213 493
- US-A1- 2006 241 474

## Beschreibung

### Stand der Technik

Die Erfindung betrifft einen Membrantopf für einen Ultraschallwandler, ein Verfahren zum Herstellen eines erfindungsgemäßen Membrantopfs sowie einen mit einem erfindungsgemäßen Membrantopf ausgestatteten Ultraschallwandler.

Aus der DE 10 2004 031 310 A1 der Anmelderin ist es bekannt, einen aus Aluminium bestehenden, insbesondere durch einen Tiefziehvorgang hergestellten Membrantopf zumindest an seiner Außenseite mit einer Chrombeschichtung zu versehen, die entweder als Abschlussschicht dient, oder aber zusätzlich von einer Lackschicht überdeckt sein kann. Zwischen dem Material des Membrantopfs im Bereich der Außenseite der Membran sowie der Chromschicht sind darüber hinaus vorzugsweise eine Kupferschicht, eine Glanznickelschicht und/oder eine Halbglanznickelschicht als Zwischenschicht angeordnet bzw. aufgebracht. Die letztgenannten Schichten dienen insbesondere der Erhöhung der Korrosionsbeständigkeit des Membrantopfs. Wesentlich ist weiterhin, dass die erwähnten Nickelschichten Schichtdicken zwischen etwa 10µm und 30µm aufweisen. Derartig dicke Nickelschichten führen zu einer Veränderung der ursprünglichen Resonanzfrequenz der Membran, was durch entsprechende konstruktive Maßnahmen ausgeglichen werden muss. Durch das Aufbringen der unterschiedlichen metallischen Schichten ist der Herstellprozess eines derartigen Membrantopfs darüber hinaus relativ aufwendig und teuer.

Weiterhin sind in den Dokumenten WO 2015/028180 A1, WO 03/045586 A1 und US 2006/241474 A1 Membrantöpfe für Ultraschallwandler beschrieben, die teilweise Merkmale des Membrantopfs gemäß Anspruch 1 offenbaren.

### Offenbarung der Erfindung

Der erfindungsgemäße Membrantopf für einen Ultraschallwandler mit den Merkmalen des Anspruchs 1 hat den Vorteil, dass er besonders einfach und kostengünstig herstellbar ist. Dies wird erfindungsgemäß im Wesentlichen dadurch erreicht, dass - im Gegensatz zum Stand der Technik - lediglich eine einzige Nickel enthaltende metallische Beschichtung zumindest an der Außenseite und der Innenseite des Membrantopfs im Bereich der Membran aufgebracht ist. Es hat sich herausgestellt, dass eine derartige metallische Schicht sich zum einen als Grundlage zum unmittelbaren Aufbringen einer Lackschicht eignet, die üblicherweise dann vorgesehen ist, wenn eine optische Angleichung der Membran an ihrer Außenseite an die Fahrzeugfarbe erwünscht ist. Darüber hinaus ermöglicht es eine derartige metallische Schicht (ggf. entsprechende Behandlung der Schicht vorgesetzt), die metallische Schicht über eine Klebstoffschicht mit einem an der Innenseite des Membrantopfs angeordneten Piezoelement zu verbinden. Der Membrantopf weist darüber hinaus den Vorteil auf, dass die Beschichtung besonders einfach ausbildet werden kann, da beispielsweise an der Innenseite des Membrantopfs keine Bereiche abgedeckt werden müssen, um diese Bereiche vor der metallischen Beschichtung zu schützen.

Vorteilhafte Weiterbildungen des erfindungsgemäßen Membrantopfs für einen Ultraschallwandler sind in den Unteransprüchen aufgeführt.

In der Erfindung ist es vorgesehen, dass die metallische Beschichtung eine Dicke zwischen 0,25µm und 0,60µm aufweist. Eine derartig dünne Beschichtung hat insbesondere den Vorteil, dass sich die Resonanzfrequenz der Membran, ebenfalls im Gegensatz zum Stand der Technik, nicht bzw. lediglich unwesentlich gegenüber dem Ursprungszustand der Membran verändert, so dass auf entsprechende Maßnahmen zur Anpassung der Resonanzfrequenz gegenüber der ursprünglichen Membran verzichtet werden kann. Darüber hinaus ist eine derartig dünne Beschichtung auch besonders ressourcenschonend.

Darüber hinaus eignet sich die Beschichtung aus Nickel, wie oben bereits erläutert, auch grundsätzlich zur Befestigung eines Piezoelements. Da weiterhin die Beschichtung an der Innenseite des Membrantopfs ebenfalls in relativ geringer Schichtdicke (insbesondere mit der gleichen Schichtdicke wie an der Außenseite des Membrantopfs) aufgebracht ist, verändert auch die an der Innenseite des Membrantopfs ausgebildete metallische Schicht bzw. Nickelschicht die Resonanzfrequenz der Membran nicht oder lediglich unwesentlich.

Wie bereits oben erläutert, eignet sich eine derartige metallische Schicht insbesondere als unmittelbarer Träger für eine Lackschicht, d.h., dass zwischen der metallischen Schicht und der Lackschicht keine zusätzlichen Schichten als Zwischenschichten angeordnet werden müssen.

Um die Innenseite des Membrantopfs bzw. die entsprechende Seite der Membran mit einem Piezoelement verbinden zu können, ist es darüber hinaus erfindungsgemäß vorgesehen, dass auf die Beschichtung unmittelbar bereichsweise eine Klebstoffschicht aufgebracht ist.

Zur Verbesserung der Haftfähigkeit der Klebstoffschicht ist es vorgesehen, dass die Beschichtung auf der der Klebstoffschicht zugewandten Seite plasmabehandelt ist.

Die Erfindung umfasst auch ein Verfahren zum Herstellen eines soweit beschriebenen Membrantopfs für einen Ultraschallwandler, wobei es erfindungsgemäß vorgesehen ist, dass das Beschichten in einem galvanischen Durchlaufverfahren erfolgt. Das Durchlaufverfahren hat den Vorteil, dass insbesondere die Anforderung an den Membrantopf hinsichtlich einer unversehrten Oberfläche der Außenseite der Membran (da diese eine Sichtfläche am Fahrzeug darstellt) erfüllt werden kann da beim Durchlaufverfahren das Risiko, dass die Oberfläche der Membran Beschädigungen in Form von kleinen Eindellungen oder Kratzern bekommt, minimiert bzw. ausgeschlossen ist.

Alternativ kann auch ein Trommelgalvanikprozess oder ein sonstiger konventioneller Galvanikprozess zur Anwendung kommen.

Bei einem Ultraschallwandler mit einem erfindungsgemäßen Membrantopf ist es darüber hinaus bevorzugt vorgesehen, dass ein mit der Membran mittels einer Klebstoffschicht verbundenes Piezoelement elektrisch mit der metallischen Beschichtung verbunden ist. Mit anderen Worten gesagt bedeutet dies, dass der Membrantopf als elektrisches Bauteil ausgebildet ist bzw. eine elektrische Funktionalität (insbesondere elektrische Masse zur Verbesserung des EMV-Schutzes) ausbildet.

Hierzu ist es zur Herstellung der elektrisch leitenden Verbindung zwischen dem Piezoelement und der Membran bevorzugt vorgesehen, dass die Klebstoffschicht als elektrisch leitende Klebstoffschicht ausgebildet ist.

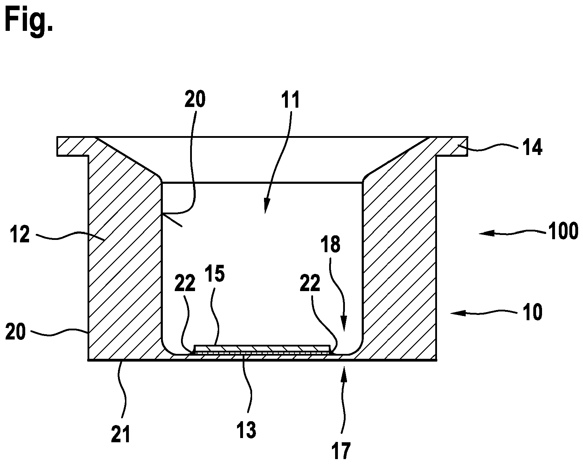

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in der einzigen Figur einen Längsschnitt durch einen erfindungsgemäßen Membrantopf mit in dem Membrantopf angeordnetem Piezoelement.

Der erfindungsgemäße Membrantopf 10 für einen Ultraschallwandler 100 kann für beliebige Anwendungen eingesetzt werden. Insbesondere ist die Verwendung in einem Kraftfahrzeug vorteilhaft, da hierbei einerseits eine hohe Korrosionsbeständigkeit gegenüber Witterungseinflüssen und z.B. auch gegenüber Streusalz gegeben sein muss, während andererseits ein akzeptables Aussehen des Membrantopfs 10 ebenfalls erforderlich ist. Die vorliegende Erfindung wird daher im Folgenden an einem Membrantopf 10 für die Verwendung in einem Ultraschallabstandssystem für ein Kraftfahrzeug erläutert.

Der Membrantopf 10, der aus Aluminium besteht und als Tiefziehteil ausgebildet ist, weist einen sacklochförmigen Hohlbereich 11 auf, der von einer radial umlaufenden Wand 12 sowie einer Membran 13 begrenzt ist. Das der Membran 13 gegenüberliegende Ende des Membrantopfs 10 weist einen radial nach außen ragenden, flanschförmigen Rand 14 auf, der der Befestigung bzw. Positionierung des Membrantopfs 10 an seinem Einbauort dient.

Die Membran 13 ist wesentlich dünner ausgeführt als die Wand 12 des Membrantopfs 10. Die Membran 13 dient auf der dem Hohlbereich 11 zugewandten Innenseite des Membrantopfs 10 der Befestigung bzw. Anordnung eines Piezoelements 15, welches wiederum in bekannter Art und Weise über nicht dargestellte elektrische Leitungen mit einer ebenfalls in dem Membrantopf 10 im Hohlbereich 12 angeordneten Auswerteelektronik bzw. einem Schaltungsträger verbunden ist.

Da die Membran 13, wie bereits erläutert, wesentlich dünner ist als die Wand 12, übertragen sich die von dem Piezoelement 15 erzeugten Schwingungen im Wesentlichen lediglich auf die Membran 13 und in lediglich geringem Ausmaß auf die Wand 12. Hierdurch soll auch eine Schallweiterleitung, die andere Ultraschallwandler 100 stören könnte, verhindert werden.

Der Querschnitt des Hohlbereichs 11 kann grundsätzlich von beliebiger Form sein, d.h., dass er insbesondere nicht kreisförmig ausgebildet sein muss.

Das Material des Membrantopfs 10 ist zumindest im Bereich der Außenseite 17 der Membran 13, vorzugsweise im Bereich der gesamten Außenseite 17 des Membrantopfs 10, sowie vorzugsweise zumindest im Bereich der dem Piezoelement 15 zugewandten Innenseite der Membran 13 mit einer Beschichtung 20 aus Nickel versehen. Die Beschichtung 20 weist eine Dicke zwischen 0,25µm und 0,60µm auf und wird im Galvanikverfahren auf das Material des Membrantopfs 10 aufgebracht. Bevorzugt findet ein Durchlaufverfahren statt, alternativ ein übliches Standardverfahren, zum Beispiel in Form einer Trommel- oder einer Gestellbeschichtung.

Die Schicht 20 dient im Bereich der Außenseite 17 der Membran 13 als Träger für eine Lackschicht 21, die unmittelbar auf die Schicht 20 aufgebracht ist. Die Innenseite 18 des Membrantopfs 10 ist zumindest in dem Bereich, in dem das Piezoelement 15 angeordnet ist, im Bereich der Schicht 20 oberflächenbehandelt, insbesondere durch eine Plasmabehandlung. Die Oberflächenbehandlung dient der Verbesserung der Haftfähigkeit einer Klebstoffschicht 22, die der Befestigung des Piezoelements 15 an der Innenseite 18 der Membran 13 dient, wobei für den Fall, dass die der Membran 13 zugewandte (Unter-) Seite des Piezoelements 15, ebenso wie der Membrantopf 10 auf elektrischer Masse angeordnet ist, die Klebstoffschicht 22 als elektrisch leitende Klebstoffschicht 22 ausgebildet sein kann. Dadurch ist es möglich, die der Membran 13 zugewandte Unterseite des Piezoelements 15 ohne zusätzliche elektrische Leitungen bzw. Verbindungen über die Klebstoffschicht 22 elektrisch leitend mit der Membran 13 zu verbinden.

Der soweit beschriebene Membrantopf 10 kann in vielfältiger Art und Weise abgewandelt bzw. modifiziert werden, ohne vom Erfindungsgedanken abzuweichen.

## Patentansprüche

1. Membrantopf (10) für einen Ultraschallwandler (100), mit einer Wand (12) zum Tragen einer Membran (13) des Membrantopfs (10), die zu Schwingungen anregbar ist, wobei der aus Aluminium bestehende Membrantopf (10) zumindest im Bereich der Membran (13) an der Außenseite (17) und der Innenseite (18) mit lediglich einer einzigen metallischen Beschichtung (20) versehen ist, wobei die Beschichtung (20) Nickel oder eine Nickellegierung, insbesondere Phosphor enthaltend, aufweist, und wobei auf der Innenseite (18) des Membrantopfs (10) unmittelbar auf die metallische Beschichtung (20) zumindest bereichsweise eine Klebstoffschicht (22) aufgebracht ist, wobei die Beschichtung (20) eine Dicke zwischen 0,25µm und 0,60µm aufweist, **dadurch gekennzeichnet, dass** auf der Außenseite (17) des Membrantopfs (10) auf die metallische Beschichtung (20) unmittelbar ohne Zwischenschichten eine Lackschicht (21) aufgebracht ist, und dass die metallische Beschichtung (20) auf der der Klebstoffschicht (22) zugewandten Seite plasmabehandelt ist.

2. Verfahren zum Herstellen eines Membrantopfs (10) für einen Ultraschallwandler (100), der nach Anspruch 1 ausgebildet ist, wobei dassdie metallische Beschichtung (20) elektrochemisch oder reaktivchemisch aus wässrigen oder lösemittelbasierten Elektrolyten aufgebracht wird.

3. Verfahren nach Anspruch 2, wobei dassdas Ausbilden der metallischen Beschichtung (20) im galvanischen Durchlaufverfahren erfolgt.

4. Ultraschallwandler (100) mit einem Membrantopf (10), der nach Anspruch 1 ausgebildet ist, wobei ein mit der Membran (13) des Membrantopfs (10) mittels einer Klebstoffschicht (22) verbundenes Piezoelement (15) elektrisch mit der metallischen Beschichtung (20) verbunden ist.

5. Ultraschallwandler nach Anspruch 4, wobei dassdie Klebstoffschicht (22) als elektrisch leitende Klebstoffschicht (22) ausgebildet ist.

6. Ultraschallwandler nach Anspruch 4 und 5, wobei die metallische Beschichtung (20) eine elektrische Masse ausbildet.

## Claims

1. Membrane cup (10) for an ultrasound transducer (100), having a wall (12) for supporting a membrane (13) of the membrane cup (10) that can be induced to vibrate, wherein the membrane cup (10) consisting of aluminium, at least in the region of the membrane (13), has been provided with merely a single metallic coating (20) on the outside (17) and the inside (18), wherein the coating (20) includes nickel or a nickel alloy, especially phosphorus-containing, and wherein an adhesive layer (22) has been applied directly to the metallic coating (20), at least in regions, on the inside (18) of the membrane cup (10),
wherein
the coating (20) has a thickness between 0.25 µm and 0.60 µm,
**characterized in that**
a paint layer (21) has been applied directly to the metallic coating (20) on the outside (17) of the membrane cup (10) without intermediate layers, and **in that** the metallic coating (20) has been plasma-treated on the side facing the adhesive layer (22).

2. Process for producing a membrane cup (10) for an ultrasound transducer (100), of the design according to Claim 1,
wherein
the metallic coating (20) is applied by electrochemical means or by chemical reaction from aqueous or solvent-based electrolytes.

3. Process according to Claim 2,
wherein
the metallic coating (20) is formed in a galvanic feed-through process.

4. Ultrasound transducer (100) having a membrane cup (10) of the design according to Claim 1,
wherein a piezoelectric element (15) bonded by means of an adhesive layer (22) to the membrane (13) of the membrane cup (10) is electrically connected to the metallic coating (20).

5. Ultrasound transducer according to Claim 4,
wherein
the adhesive layer (22) takes the form of an electrically conductive adhesive layer (22).

6. Ultrasound transducer according to Claim 4 and 5, wherein
the metallic coating (20) forms an electrical earth.

## Revendications

1. Pot à membrane (10) destiné à un transducteur à ultrasons (100), ledit pot à membrane comprenant une paroi (12) qui est destinée à supporter une membrane (13) du pot à membrane (10) et qui peut être excitée de manière à vibrer, le pot à membrane (10) en aluminium étant pourvu d'un seul revêtement métallique (20) du côté extérieur (17) et du côté intérieur (18) au moins dans la zone de la membrane (13), le revêtement (20) comportant du nickel ou un alliage de nickel, en particulier contenant du phosphore, et une couche adhésive (22) étant appliquée au moins par endroits directement sur le revêtement métallique (20) du côté intérieur (18) du pot à membrane (10), le revêtement (20) ayant une épaisseur comprise entre 0,25 µm et 0,60 µm, **caractérisé en ce que**, du côté extérieure (17) du pot à membrane (10), une couche de vernis (21) est appliquée directement sur le revêtement métallique (20) sans couches intermédiaires, et **en ce que** le revêtement métallique (20) est traité au plasma du côté dirigé vers la couche adhésive (22).

2. Procédé de fabrication d'un pot à membrane (10) qui est destiné à un transducteur à ultrasons (100) et qui est conçu selon la revendication 1, le revêtement métallique (20) étant appliqué par voie électrochimique ou par voie chimique réactive à partir d'électrolytes aqueux ou à base de solvant.

3. Procédé selon la revendication 2, la formation du revêtement métallique (20) étant effectuée dans un procédé galvanique continu.

4. Transducteur à ultrasons (100) comprenant un pot à membrane (10), qui est conçu selon la revendication 1, un élément piézoélectrique (15) relié à la membrane (13) du pot à membrane (10) au moyen d'une couche adhésive (22) étant relié électriquement au revêtement métallique (20) .

5. Transducteur à ultrasons selon la revendication 4, la couche adhésive (22) étant conçue sous la forme d'une couche adhésive électriquement conductrice (22).

6. Transducteur à ultrasons selon les revendications 4 et 5, le revêtement métallique (20) formant une masse électrique.
